# EUROPEAN PATENT APPLICATION

(11) **EP 1 096 406 A2**
(43) Date of publication of application: **02.05.2001**
(21) Application number: 00309137.8
(22) Date of filing: 17.10.2000
(51) Int. Cl.: G06F 17/60

(54) **Computer upgrading**

(30) Priority: 29.10.1999 GB 9925545
(71) Applicant: Madonion OY, 02200 Espoo (FI)
(72) Inventor: Mäki, Marcus, 00230 Espoo (FI)
(74) Representative: Lind, Robert

(57) **Abstract**

A method of providing computer upgrade information to a computer user and comprising examining the hardware and/or software components in a client computer 1, 4-7. The results of the examination are sent from the client computer 1, 4-7 to a central computer 10 over the Internet 2. On the basis of the received results, the central computer 10 determines one or more upgrades which would improve a performance criterion or criteria of the client computer 1, 4-7. An identification of the upgrade(s) is sent from the central computer 10 to the client computer 1, 4-7 over the Internet 2 together with an option to purchase the identified upgrade(s).

## Description

The present invention relates to computer upgrading and in particular, though not necessarily, to the upgrading of computer 3D graphics or video capabilities.

Improvements in computer hardware and software applications tend go hand in hand. This means that owners of existing computers rapidly find their systems becoming obsolete, at worst incapable of running the latest software or at best of running new software with a degraded performance. Rather than continually having to acquire a new computer in order to run the latest software, users may be able to upgrade their existing system by installing new hardware or software components. In the near future, it is likely that this will also be true of palmtop computers, PDAs, mobile telephones/communicators, etc.

One problem with installing new components is that it can be difficult to choose which components will have the most beneficial effect for an existing system. Given that there are thousands of different upgrade possibilities on the market, a non-expert user either has to take a chance that a particular component or combination of components will make a significant difference to his system, or must spend a lot of time reading reviews and comparisons to make an educated guess as to which upgrade will work best.

Another problem with adding hardware or software components to improve the performance of a system is that certain minimum system requirements may be necessary for these upgrades to work. A user seeking to upgrade existing hardware to run more sophisticated software must still ensure that the upgrade is compatible with his existing system.

It is an object of the present invention to overcome or at least mitigate the above noted disadvantages. This and other objects are achieved by centrally selecting a suitable upgrade on the basis of information sent over the Internet from a client computer and by returning to the client computer an upgrade purchase option. In a mobile wireless environment, this information may alternatively be transferred using a text messaging service.

According to a first aspect of the present invention there is provided a method of providing computer upgrade information to a computer user and comprising the steps of:
(a) examining the hardware and/or software components in a client computer using a software analysis program;
(b) sending the results of the examination from the client computer to a central computer over the Internet;
(c) determining at the central computer, on the basis of the received results, one or more upgrades which would improve a performance criterion or criteria of the client computer, and
(d) sending an identification of the upgrade(s) from the central computer to the client computer over the Internet together with an option to purchase the identified upgrade(s).

Embodiments of the present invention allow a non-expert user to identify an upgrade which can improve his computer system's performance. The risks involved in purchasing components to upgrade the system are reduced.

Preferably, the results of the examination include information about one or more performance criteria of the client computer. More preferably, a performance criteria is one of 3-D graphics performance, video performance, audio performance, Microsoft Office™ performance or Internet performance.

Preferably, the results of the examination include an inventory of certain components of the client computer.

Preferably, the method comprises recording at least apart of the results of the examination at the central computer.

Preferably, step (c) comprises comparing the results of the examination of the client computer against results previously collected for other computers.

Preferably, the results of the examination include information about one or more performance criteria of the client computer and an inventory of certain components of the client computer, and step (c) comprises comparing the collected inventory and performance information against a database of inventory and performance information previously collected for other computers.

Preferably, said identification of the determined upgrade(s) is sent to the user in an html file or files and the option to purchase is included in the file(s) as one or more hyperlinks. Alternatively, Wireless Markup Language (WML) may be used to send upgrade information to a wireless terminal such as a PDA.

The term "Internet" as used here encompasses the World Wide Web (WWW), Wireless Application Protocol (WAP), e-mail, and future developments of these systems.

According to a second aspect of the present invention there is provided a method of selling computer hardware and software components to a computer user, the method comprising:
performing an analysis of the user's computer using a software analysis program;
sending the results of the analysis to a central computer system over the Internet;
determining at the central computer system, from said results, one or more upgrades which would improve the performance of the user's computer,
sending an identification of the upgrade(s) to the user's computer over the Internet together with an option to purchase the upgrade(s);
in the event that the user selects an option to purchase, conducting an electronic transaction over the Internet between the user's computer and the central computer system or another computer system over the Internet; and
delivering the purchased upgrade(s) to the user.

According to a third aspect of the present invention there is provided method of selecting a computer to meet a customer's requirements, the method comprising the steps of:
(a) carrying out an analysis of the hardware and software components of a multiplicity of computers;
(b) determining the performance of said multiplicity of computers over a set of performance criteria;
(c) incorporating the results of said analyses and the determined performances into a database;
(d) collecting details of a customer's requirements; and
(e) inspecting said database to identify a hardware and software configuration which best matches the customer's requirements.

According to a fourth aspect of the present invention there is provided a method of providing technical support to a computer user, the method comprising:
performing an analysis of the user's computer using a software analysis program;
sending the results of the analysis to a central computer system over the Internet;
inspecting a database, constructed using analysis data previously uploaded from a multiplicity of computers over the Internet, using said results to identify potential technical problems and/or solutions to technical problems with the user's computer; and
communicating identified technical problems and/or solutions to technical problems to the user.

It will be appreciated the identified technical problems and/or solutions to technical problems may be communicated to the user over the Internet, e.g. using e-mail, or over the telephone. Other methods of communication are also envisaged.

According to a first aspect of the present invention there is provided a method of providing computer upgrade information to a user of a wireless computer device and comprising the steps of:
(a) examining the hardware and/or software components in a client wireless computer device using a software analysis program;
(b) sending the results of the examination from the client computer device to a central computer;
(c) determining at the central computer, on the basis of the received results, one or more upgrades which would improve a performance criterion or criteria of the client computer device; and
(d) sending an identification of the upgrade(s) from the central computer to the client computer device together with an option to purchase the identified upgrade(s).

The computer device may be a mobile telephone, mobile communicator, PDA, or the like. Information may be transferred between the device and the central computer via the Internet (WWW/WAP), e-mail, or a text messaging service such as SMS.

For a better understanding of the present invention and in order to show bow the same may be carried into effect reference will now be made, by way of example, to the accompanying drawings, in which:
Figure 1 illustrates schematically a number of client computers and a central computer attached to the Internet;
Figure 2 illustrates the steps involved in obtaining upgrade suggestions for different types of client computers;
Figure 3 is a flow diagram showing the process involved in creating and using an upgrade analysis database; and
Figure 4 shows the structure of an upgrade analysis database.

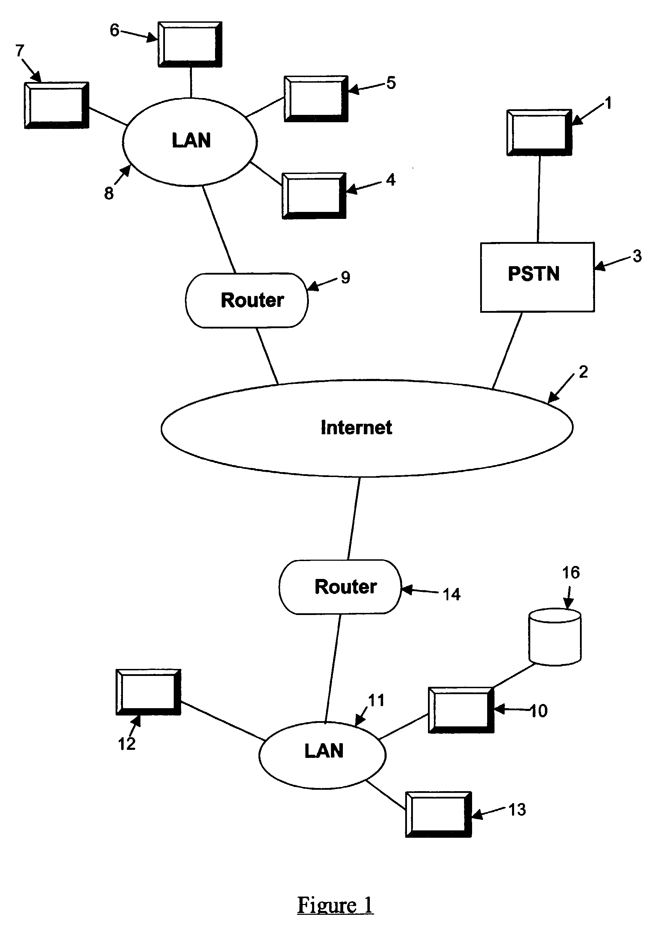

Figure 1 illustrates generally the way in which a number of "client" computers can communicate with each other via the Internet. Where the client computer is a PC 1 used in the home, the computer may be connected to the Internet 2 via a Public Switched Telephone Network (PSTN) 3. Where the client computers are corporate based PCs 4, 5, 6, 7 connected together via a Local Area Network (LAN) 8, a router 9 may connect the LAN 8 directly to the Internet 2. Other LANs (not shown) may be connected to the Internet 2 via PSTNs.

Figure 1 further illustrates a "central" computer 10 which is owned and maintained by a private corporation and which operates to provide an upgrade service to the client computers 1, 4-7. The central computer 10 may be connected to another corporate LAN 11, to which other computers 12, 13 are also connected. A router 14 connects this second LAN 11 to the Internet 2. Thus, any of the client computers 1, 4-7 may be connected to the central computer 10 via the Internet 2. Furthermore, the central computer 10 may act as a web server on which is stored information which can be downloaded and viewed by web browsers resident on the client computers.

Users of client computers 1, 4-7 wishing to upgrade their computer systems may be divided into two categories: "Home Users" and 'Power Users". Two types of software are distributed to these users by the private corporation; "Benchmark" software and "Thin Client" software. The software distribution is preferably free, and may take place across the Internet or by way of compact discs or floppy disks attached to computer magazines. The Benchmark software is intended to be run by Power Users, and the Thin Client software is intended to be run by Home Users. Both types of software are designed to be run locally on a client computer.

The Benchmark software run by Power Users performs a test which generates a detailed list of certain hardware and software components (e.g. CPU, memory, installed driver, software applications, etc) present on a client computer. The Benchmark software also runs tests to determine the current performance of the client computer in one or more specific areas. The client computer user will normally see only a summary of this information, ideally in the form of a score or benchmark for his computer. Typically, execution of the Benchmark software causes an Internet connection to be established between the host client computer and the central computer. The results of the tests together with the detailed list of hardware and software components is transmitted to the central computer 10 over the Internet 2. The central computer 10 determines which upgrades will most benefit the client computer and returns this information to the client computer, again over the Internet.

In order to enable the most useful upgrades to be determined, the details submitted by Power Users are recorded by the central computer 10, and a database 14 is built up of hardware and software set-ups together with their respective performances (i.e. benchmarks). When a new submission is made to the central computer 10 by a Power User, the details of the client computer are compared with those already in the database 14. The new submission can then be "graded" with respect to other client computers, and suggestions for upgrades made on the basis of comparisons between computers with higher and lower grades. The details of the new submission are then added to the database 14.

Once the central computer 10 has determined the most useful upgrades for the Power User, details of these are sent to the client computer 10 over the Internet 2. In the web page displayed on the client computer, embedded hyperlinks enable the user to order upgrade components. If the user selects a link, an electronic transaction is commenced over the Internet 2. On completion of the transaction, the upgrade component(s) can be dispatched by post or courier from the private corporation or a component distributor.

It will be appreciated that an important advantage of this proposal is that a user who is not fully conversant with the workings of a computer can receive an expert suggestion as to what would make his system run faster, and has the opportunity to buy the suggested component(s) without having to look elsewhere (e.g. by visiting his local component store). Additionally, the central computer 10 can be arranged so that only components which are guaranteed to work with the user's current computer are suggested, obviating the need for careful checking for compatibility on the part of the user.

The second type of software that can be run locally on a client computer 1, 4-7 has been mentioned above; this is the "Thin Client" software and is aimed primarily at the home user rather than the corporate user. The Thin Client is smaller in size than the Benchmark, and collects only basic information about the client computer without running any performance tests. This basic information is transmitted to the central computer over the Internet 2. The central computer 10 can estimate the performance of the client computer by comparison with similar computer systems, and then suggest upgrades in the same way as described above for a Power User.

The Thin Client may be downloaded from the Internet or obtained from a free CD or disk with a magazine in the same way as the Benchmark software. The thin client software may automatically connect the host client computer to the central computer's web site, simultaneously uploading the results of its analysis back to the central computer 10. This may be done using an Active X component. An Active X component is a "plug-in" which can be used with Microsoft Internet Explorer^{TM}. This plug-in can access almost all of the resources of the client computer so that the operations performed by the Thin Client software can be performed automatically without the user's intervention. Alternatively, these operations may be performed by a Netscape^{TM} plug-in or Java component, or with a similar tool which can be used alone or through a web browser.

There are two chief advantages to a Home User of using the Thin Client software rather than the Benchmark software. Firstly, as the Thin Client software is much smaller than the Benchmark software, it will be much quicker to download (if that is the means by which the software is acquired). Secondly, the Thin Client program runs much faster than the Benchmark software since no performance tests are performed. Typically, the Benchmark program will take 5-10 minutes to analyse a client computer, whereas the Thin Client will obtain all the necessary information in only a few seconds.

The upgrades suggested by the central computer 10, both to Home Users and to Power Users, may be graded in terms of improvement with respect to price. For example, upgrading a software driver could give a 10% improvement in performance without costing anything, whereas upgrading a piece of hardware such as a 3D accelerator or video card may give a dramatic improvement but at a substantial cost. Even the option of buying a new top of the range PC may be suggested, along with the percentage improvement in performance which this will result in.

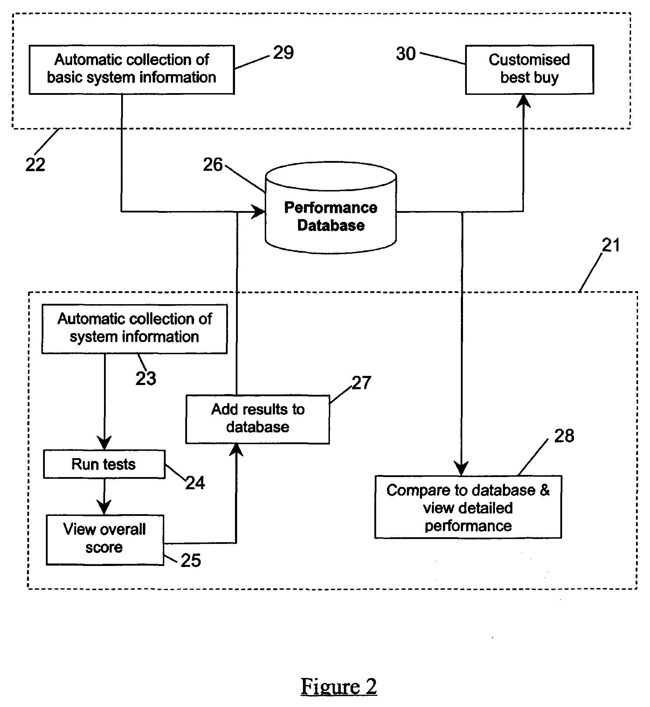

Figure 2 shows the interrelationship between the two different types of user (client computer) and the central computer 10 to further illustrate the preferred embodiment of the present invention. The actions performed by a Power User are generally contained within box 21, and those by a Home User in box 22. The Power User runs the Benchmark software, which initially performs automatic collection of system information 23, runs tests 24, and displays the overall score or benchmark 25. These detailed results are then submitted to the central database 26 for comparison with similar systems. The results are also added to the database 27 so that the database is continually updating itself. The results of the comparison with the database are then transmitted back to the client computer 20 so that the client computer user can compare his computer's performance with that of other similar systems, and buy suggested upgrades if necessary.

The Home User 22 runs the Thin Client which automatically collects basic system information about his computer 29 and submits this information to the central database 26. The analysis program may connect to the central computer's web site but it is also possible for a client to bypass the web site and connect directly to the database so that all interaction with the user happens through a Windows program, or even automatically through a background process without any user interaction. The home user is then given a straightforward list of upgrade choices 30 graded by performance increase against price. The user can download better drivers, buy components or whole computers, whilst knowing how much better the new set-up will work compared to his current one.

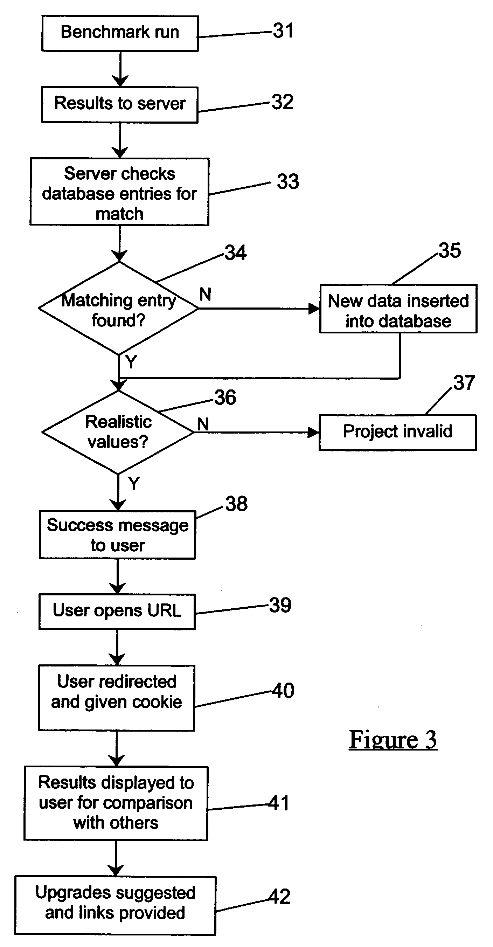

One particular embodiment of the invention is concerned with analysing the 3-D graphics performance of client computers, and the flow chart of Figure 3 illustrates the process by which a Power User obtains upgrade suggestions for improving this particular performance aspect. Once the Benchmark software has been run by the client computer 31, the results and hardware information are sent to the central computer 32, which initiates a new "project" based on this submission.

The central computer goes through all "basic information" database entries (3D card, CPU, drivers and driver versions for different parts of hardware, windows version etc.) 33 and seeks a match for the various components of the client computer's set-up. If matching information is not found 34, the new data is entered into the database 35. New data is given an identification and a reference to the basic information table. All new 3D cards are first marked as an "unknown" chipset that causes them to be excluded from all comparisons.

The next stage 36 is to check the validity of the entry. For example, if the submitted CPU speed > 1000 MHz, the project is marked as invalid 37. However, the results are still entered into the database (all basic information in the database contains a status that can be used to mark it as not suitable for statistical analysis). If the entry appears valid, then the central computer sends a message to the client computer 38 indicating that that the process was a success. The central computer also identifies a URL to the client computer. The web browser on the client computer then opens this URL 39.

The URL points to a program 40 that redirects the client computer to another address. The client computer's browser is simultaneously passed a cookie. The client computer's browser then opens the "true" URL that points to a program that compares results. This program 41 uses the cookie, which the browser received following successful submission, to identify the client and the current project. The client computer's project is then fetched from the database, together with previous projects submitted by client computers having the same chipset, CPU, optimisation, resolution, colour depth and buffering. Invalid projects are not used.

Finally, the client computer's set-up is displayed on the client computer's browser together with the average of the results calculated for previous similar client computers; a graph of the results is created 42. By default, the minimum-maximum range for performance is divided into 8 equal steps and a bar graph of these steps displayed. If the client computer's results are below average, a message informing its user of this is displayed together with a link to a page giving the most common reasons for this. As already discussed, links are also provided so that the user can immediately order any suggested upgrades to improve the performance of his computer as already described.

A similar process may be used in order to offer upgrades to improve the performance capabilities of, for example, a client computer's video, audio, Microsoft Office™ or Internet performance.

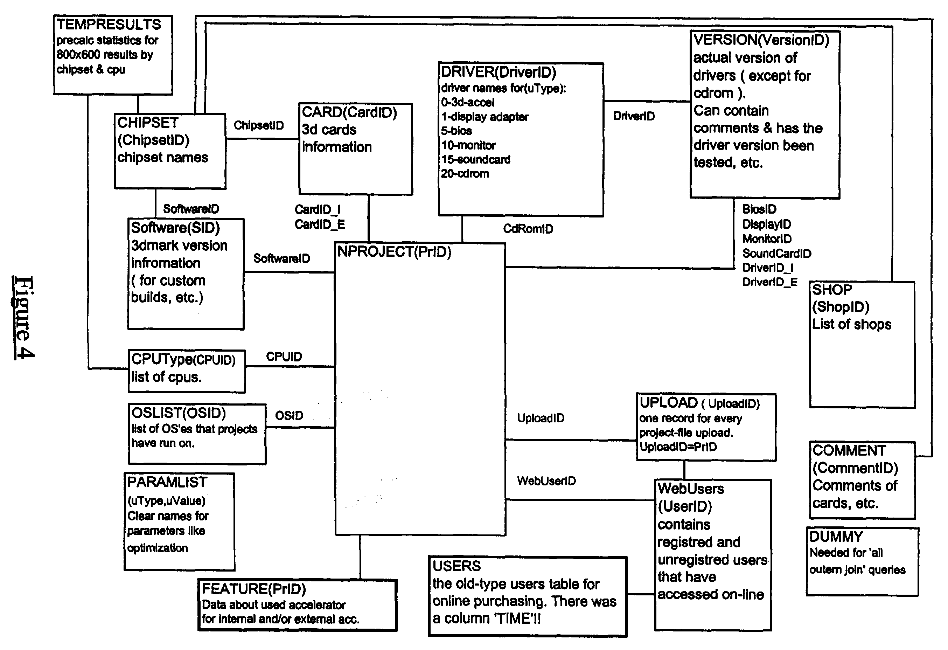

Figure 4 shows the structure of the database provided on the central computer.

It will be appreciated by the person of skill in the art that various modifications may be made to the above described embodiments without departing from the scope of the present invention. For example, the client computer result analysis and upgrade selection process may be made collectively by two or more computers or computer systems at the central corporate facility. In another alternative embodiment, the actual transaction part of the process, involving the transfer of credit card details, electronic cash or the like, is conducted between the client computer and a trusted third party, for example a bank. Confirmation of completion of the transaction is then passed from the third party to the private corporation.

The database collected by the private corporation may be put to alternative uses. For example, customers may submit to the central computer, over the Internet, a list of computer performance requirements. This could be done using an on-line form available on the private corporations web site. The central computer would then search the database to identify the configuration which best matches a customer's requirements. The customer could then be notified of the cost of purchasing a computer made to the determined configuration, and given an option to purchase.

Another use of the database is to provide a knowledge base for technical support. For example, a corporation could construct a database using the Benchmark and Thin Client software described above. When a customer requires support, he could log-on to the corporation's home page over the Internet. If the customer's computer has not previously been analysed, the Thin Client or Benchmark software would be run and the results uploaded to the corporation's computer system. A support staff member can then use the knowledge base to identify (potential) problems with the customer's computer and/or solutions to problems. For example, it may be apparent from the knowledge base that a particular software application may not run on a certain computer configuration due to insufficient memory. The results can be communicated to the customer by e-mail or over the telephone. It is also envisaged that this process may be completely "automated", obviating the need for support staff involvement.

## Claims

1. A method of providing computer upgrade information to a computer user and comprising the steps of:
(a) examining the hardware and/or software components in a client computer using a software analysis program;
(b) sending the results of the examination from the client computer to a central computer over the Internet;
(c) determining at the central computer, on the basis of the received results, one or more upgrades which would improve a performance criterion or criteria of the client computer, and
(d) sending an identification of the upgrade(s) from the central computer to the client computer over the Internet together with an option to purchase the identified upgrade(s).

2. A method as claimed in claim 1, wherein the results of the examination include information about one or more performance criteria of the client computer.

3. A method as claimed in claim 1 or 2, wherein a performance criteria is one of 3D graphics performance, video performance, audio performance, Microsoft Office™ performance or Internet performance.

4. A method as claimed in any one of the preceding claims, wherein the results of the examination include an inventory of certain components of the client computer.

5. A method as claimed in claim 4 and comprising recording at least a part of the results of the examination at the central computer.

6. A method as claimed in any one of the preceding claims, wherein step (c) comprises comparing the results of the examination of the client computer against results previously collected for other computers.

7. A method as claimed in any one of the preceding claims, wherein the results of the examination include information about one or more performance criteria of the client computer and an inventory of certain components of the client computer, and step (c) comprises comparing the collected inventory and performance information against a database of inventory and performance information previously collected for other computers.

8. A method as claimed in any one of the preceding claims, wherein said identification of the determined upgrade(s) is sent to the user in an html file or files and the option to purchase is included in the files(s) as one or more hyperlinks.

9. A method of providing computer upgrade information to a computer user substantially as hereinbefore described with reference to the accompanying drawings.

10. A method of selling computer hardware and software components to a computer user, the method comprising:
performing an analysis of the user's computer using a software analysis program;
sending the results of the analysis to a central computer system over the Internet;
determining at the central computer system, from said results, one or more upgrades which would improve the performance of the user's computer,
sending an identification of the upgrade(s) to the user's computer over the Internet together with an option to purchase the upgrade(s);
in the event that the user selects an option to purchase, conducting an electronic transaction over the Internet between the user's computer and the central computer system or another computer system over the Internet; and
delivering the purchased upgrade(s) to the user.

11. A method of selecting a computer to meet a customer's requirements, the method comprising the steps of:
(a) carrying out an analysis of the hardware and software components of a multiplicity of computers;
(b) determining the performance of said multiplicity of computers over a set of performance criteria;
(c) incorporating the results of said analyses and the determined performances into a database;
(d) collecting details of a customer's requirements; and
(e) inspecting said database to identify a hardware and software configuration which best matches the customer's requirements.

12. A method of providing technical support to a computer user, the method comprising:
performing an analysis of the user's computer using a software analysis program;
sending the results of the analysis to a central computer system over the Internet;
inspecting a database, constructed using analysis data previously uploaded from a multiplicity of computers over the Internet, using said results to identify potential technical problems and/or solutions to technical problems with the user's computer, and
communicating identified technical problems and/or solutions to technical problems to the user.

13. A method of providing upgrade information to a user of a wireless computer device and comprising the steps of:
(a) examining the hardware and/or software components in a client wireless computer device using a software analysis program;
(b) sending the results of the examination from the client computer device to a central computer;
(c) determining at the central computer, on the basis of the received results, one or more upgrades which would improve a performance criterion or criteria of the client computer device; and
(d) sending an identification of the upgrade(s) from the central computer to the client computer device together with an option to purchase the identified upgrade(s).
